(19) Europäisches Patentamt
European Patent Office
Office européen des brevets

(11) **EP 4 531 482 A1**

(12) **EUROPEAN PATENT APPLICATION**
published in accordance with Art. 153(4) EPC

(43) Date of publication:
**02.04.2025 Bulletin 2025/14**

(21) Application number: **23839059.5**

(22) Date of filing: **14.07.2023**

(51) International Patent Classification (IPC):
*H04W 74/08* (2024.01)

(52) Cooperative Patent Classification (CPC):
**H04W 56/00; H04W 74/00; H04W 74/08;
H04W 74/0833**

(86) International application number:
**PCT/CN2023/107469**

(87) International publication number:
**WO 2024/012571 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.07.2022 CN 202210836008**

(71) Applicants:
• **CHINA MOBILE COMMUNICATION CO., LTD
RESEARCH INSTITUTE
Beijing 100053 (CN)**

• **CHINA MOBILE COMMUNICATIONS GROUP CO.,
LTD.
Beijing 100032 (CN)**

(72) Inventors:
• **ZUO, Jun
Beijing 100032 (CN)**
• **WEN, Jinhui
Beijing 100032 (CN)**
• **KE, Ting
Beijing 100032 (CN)**

(74) Representative: **GPI Brevets
1330, rue Guillibert de la Lauzière
EuroParc de Pichaury
Bât B2
13856 Aix en Provence Cedex 3 (FR)**

(54) **RANDOM ACCESS METHOD AND APPARATUS, AND TERMINAL AND NETWORK-SIDE DEVICE**

(57) The present disclosure provides a random-access method and device, and UE and a network equipment. The method includes: receiving first information for instructing a UE to perform random-access, sent by a first cell, where the first information includes second information for indicating a second cell, the first cell is one of serving cells of the UE, and the second cell is a cell with an index different from that of the first cell; sending a random-access message to the second cell according to the first information.

receiving first information for instructing UE to perform random access, sent by a first cell; where the first information includes second information for indicating a second cell, the first cell is one of the serving cells of the UE, and the second cell is a cell with an index different from that of the first cell — S210

sending a random access message to the second cell according to the first information — S220

FIG. 2

EP 4 531 482 A1

## Description

## CROSS-REFERENCE TO RELATED APPLICATION

The present application is filed based on and claims the priority of Chinese Application No. 202210836008.6 filed on July 15, 2022, the disclosure of which are incorporated in their entireties by reference herein.

## TECHNICAL FIELD

The present disclosure relates to the field of wireless technologies, and in particular to a random-access method and device, UE and network equipment.

## BACKGROUND

Currently, inter-cell beam management supports configuring synchronization signal and physical broadcast channel (PBCH) block (SSB) of a non-serving cell as a beam measurement reference signal. A UE can report layer 1 reference signal receiving power (L1-RSRP) measurement result of SSB for the non-serving cell, and a serving cell can select a beam of the non-serving cell for serving the UE.

Due to enhanced mobility based on layer 1/layer 2 (L1/L2) control signaling, L1/L2 control signaling can be used to complete handover to reduce latency. Considering that a source base station (serving cell) can configure in advance multiple candidate cells or target cells for the UE, as well as radio resource control (RRC) of these cells, one of RRC configurations is activated/deactivated based on the L1 measurement result to complete the handover.

For asynchronous scenarios, it is necessary to obtain timing advance (TA) information of the target cell. In traditional handover procedure, the UE needs to initiate a random-access with the target cell in the layer 3 process to obtain TA and other information to complete synchronization with the target cell. This method will cause the problem of high delay in the synchronization process with the target cell (non-serving cell), and cannot meet the demand for reducing delay.

## SUMMARY

An object of the present disclosure is to provide a random-access method and device, UE and network equipment, which can solve the problem of high delay in the synchronization process between UE and the target cell (non-serving cell) in the related art.

The present disclosure provides a random-access method, performed by a user equipment (UE), including:

receiving first information for instructing a UE to perform random-access, sent by a first cell; wherein the first information includes second information for indicating a second cell, the first cell is one of the serving cells of the UE, and the second cell is a cell with an index different from that of the first cell;
sending a random-access message to the second cell according to the first information.

Optionally, in random-access method, the method further includes:
receiving a random-access response message sent by the second cell; where the random-access response message includes timing advance (TA) information of the second cell.

Optionally, in random-access method, the second information includes one or more of the following:

index of the second cell;
configuration information index of the second cell;
reference signal index of the second cell;
random-access resource index of the second cell;
random preamble index of the second cell.

Optionally, in random-access method, the method further includes:

determining resource information for sending the random-access message according to the second information and configuration information of at least one third cell;
wherein the second cell is one of the at least one third cell.

Optionally, in random-access method, the configuration information includes one or more of the following information:

random-access channel (RACH) resource;
random-access channel transmission occasion (RACH occasion);
association between RACH resource and synchronization signal block (SSB);
association between RACH occasion and SSB;
association between RACH resource and channel state information reference signal (CSI-RS);
association between RACH occasion and CSI-RS;
index of configuration information;
maximum transmit power (Pcmax).

Optionally, in random-access method, the resource information includes a preamble index of a random-access preambles and/or time frequency domain resources for sending the random-access preambles.

Optionally, in random-access method, the first information further includes a reference signal index;

the sending a random-access message to the second cell, includes:
sending the random-access message to the second cell by using the same spatial parameter as a reference signal indicated by the reference signal index.

Optionally, in random-access method, the method further includes:
calculating a transmission power of the random-access message according to the reference signal and/or power information corresponding to the second cell.

Optionally, in random-access method, the method further includes:
determining the reference signal corresponding to the second cell according to the reference signal index in the second information.

One embodiment of the present disclosure further provides a random-access method, performed by a first cell, including:
sending first information for instructing a UE to perform random-access, to the UE; wherein the first information includes second information for indicating a second cell, the first cell is one of the serving cells of the UE, and the second cell is a cell with an index different from that of the first cell.

Optionally, in random-access method, the second information includes one or more of the following:

index of the second cell;
configuration information index of the second cell;
reference signal index of the second cell;
random-access resource index of the second cell;
random preamble index of the second cell.

Optionally, in random-access method, the method further includes:

sending radio resource control (RRC) information to the UE; wherein the RRC information includes configuration information of at least one third cell, and the second cell is one of the at least one third cell;
wherein the configuration information includes one or more of the following information:
random-access channel (RACH) resource;
random-access channel transmission occasion (RACH occasion);
association between RACH resource and synchronization signal block (SSB);
association between RACH occasion and SSB;
association between RACH resource and channel state information reference signal (CSI-RS);
association between RACH occasion and CSI-RS;
index of configuration information;
maximum transmit power (Pcmax).

One embodiment of the present disclosure further provides a UE, including: a transceiver; wherein the transceiver is configured to:

receive first information for instructing the UE to perform random-access, sent by a first cell; wherein the first information includes second information for indicating a second cell, the first cell is one of the serving cells of the UE, and the second cell is a cell with an index different from that of the first cell;
send a random-access message to the second cell according to the first information.

One embodiment of the present disclosure further provides a network equipment, applied to a first cell, including a transceiver; wherein the transceiver is configured to:
send first information for instructing a UE to perform random-access, to the UE; wherein the first information includes second information for indicating a second cell, the first cell is one of the serving cells of the UE, and the second cell is a cell with an index different from that of the first cell.

One embodiment of the present disclosure further provides a random-access device, applied to a UE, including:

a receiving module configured to receive first information for instructing the UE to perform random-access, sent by a first cell; wherein the first information includes second information for indicating a second cell, the first cell is one of the serving cells of the UE, and the second cell is a cell with an index different from that of the first cell;
a first sending module configured to send a random-access message to the second cell according to the first information.

One embodiment of the present disclosure further provides a random-access device, performed by a first cell, including:
a second sending module configured to send first information for instructing a UE to perform random-access, to the UE; wherein the first information includes second information for indicating a second cell, the first cell is one of the serving cells of the UE, and the second cell is a cell with an index different from that of the first cell.

One embodiment of the present disclosure further provides a network equipment, including: a processor, a memory, and a program stored on the memory and executable on the processor; wherein the program, when executed by the processor, causes the processor to perform any one of the above random-access method.

One embodiment of the present disclosure further provides a readable storage medium, including a program stored thereon; wherein the program, when executed by a processor, causes the processor to perform any one of the above random-access method.

At least one of the above technical solutions of the present disclosure has the following beneficial effects.

By using the random-access method in this embodiment, when sending, to the UE, first information indicating random-access, the first information indicating random-access with second information indicating a second cell, triggers transmission of a random-access message to the second cell; in this way, the first information indicating random-access can trigger the UE to random access the target cell (second cell), that is, performing random-access to the target cell before cell switch, which can avoid random-access to the target cell through the L3 handover procedure, and obtain TA and other information to complete synchronization with the target cell. Therefore, the problem of high delay in the synchronization process with the target cell (non-serving cell) can be avoided.

**BRIEF DESCRIPTION OF THE DRAWINGS**

FIG. 1 is a schematic diagram of an application system architecture of a random-access method according to an embodiment of the present disclosure;
FIG. 2 is a schematic flowchart of a random-access method according to one embodiment of the present disclosure;
FIG. 3 is a schematic flowchart of one implementation of the method according to one embodiment of the present disclosure;
FIG. 4 is a schematic flowchart of a random-access method according to another embodiment of the present disclosure;
FIG. 5 is a schematic structural diagram of a device according to an embodiment of the present disclosure;
FIG. 6 is a schematic structural diagram of a network equipment according to an embodiment of the present disclosure;
FIG. 7 is a schematic structural diagram of one implementation of a random-access device according to the embodiment of the present disclosure; and
FIG. 8 is a schematic structural diagram of another implementation of a random-access device according to the embodiment of the present disclosure.

**DETAILED DESCRIPTION**

In order to make technical problems to be solved, technical solutions and advantages of the present disclosure clearer, a detailed description will be given hereinafter with reference to the accompanying drawings and specific embodiments.

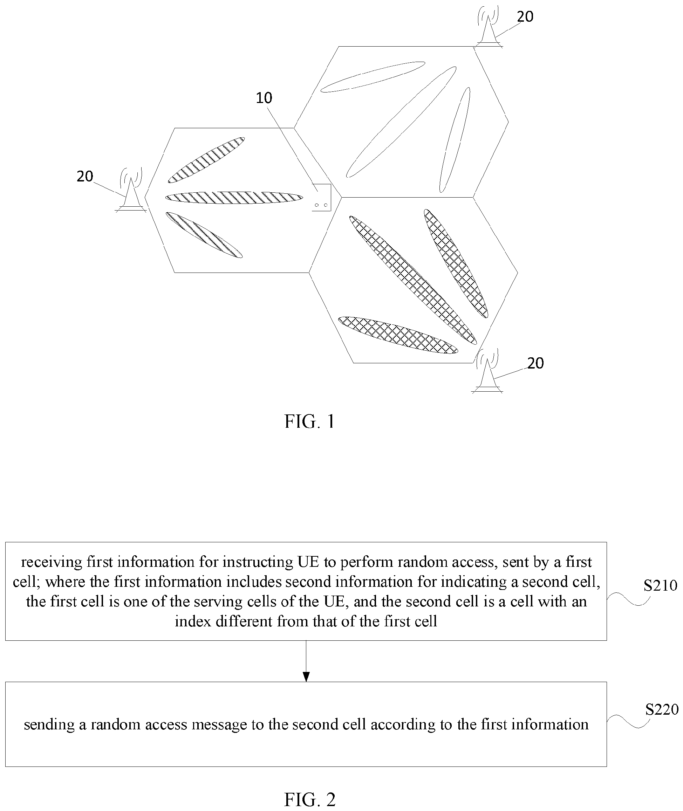

An application system architecture of a random-access method according to an embodiment of the present disclosure is shown in FIG. 1, and includes at least one UE 10 and at least one cell 20. Each cell 20 may correspond to a network equipment, such as a base station. Optionally, each UE 10 corresponds to at least one serving cell and at least one non-serving cell. Different cells 20 can send measurement reference signals, respectively. The UE can report an L1-RSRP measurement result of SSB of the non-serving cell, and the serving cell can select the beam of the non-serving cell for serving UE.

In order to solve the problem in related art that the UE needs to initiate random-access with the target cell during the handover process to obtain TA and other information to complete synchronization with the target cell, resulting in high delay in the synchronization process, one embodiment of the present disclosure provides a random-access method, including: when sending, to a UE, first information indicating random-access, triggering, by the first information indicating random-access with second information indicating a second cell, transmission of a random-access message to the second cell; where the second cell is a cell having an index different from that of the first cell, the first cell is one of serving cells of the UE, and the second cell can be a target cell different from the serving cell or a non-serving cell. Therefore, with this implementation, the first information indicating random-access can trigger the UE to random access the non-serving cell, that is, performing random-access to the target cell before cell switch, which can avoid random-access to the target cell through the L3 handover procedure, and obtain TA and other information to complete synchronization with the target cell. Therefore, the problem of high delay in the synchronization process with the target cell (non-serving cell) can be avoided.

As shown in FIG. 2, one embodiment of the present disclosure provides a random-access method, performed by a UE. The method includes:

S210: receiving first information for instructing the UE to perform random-access, sent by a first cell; where the first information includes second information for indicating a second cell, the first cell is one of the serving cells of the UE, and the second cell is a cell with an index different from that of the first cell;

S220: sending a random-access message to the second cell according to the first information.

In the embodiment of the present disclosure, the first cell is one of the serving cells of the UE; and the second cell is a cell with an index different from the first cell, that is, a target cell different from the first cell. Optionally, the second cell can be a non-serving cell.

In the embodiment of the present disclosure, optionally, after sending the random-access message to the second cell, the method further includes:

receiving a random-access response message sent by the second cell; where the random-access response message includes timing advance (TA) information of the second cell.

By using the random-access method in this embodiment, after the first information indicating random-access triggers the UE to random access the second cell (target cell), the second cell can send the TA information to the UE to enable the UE to complete synchronization with the second cell, so that the UE can obtain the TA information of the target cell during the L1/L2-based cell switch procedure, thereby reducing the delay caused by random-access during handover.

In one embodiment, optionally, the first information is downlink control information (DCI), which is indicated or transmitted through a physical downlink control channel (PDCCH). The DCI is used to indicate the UE to initiate random-access. Optionally, the DCI is scrambled by a cyclic redundancy check (CRC) and the DCI format is 1_0, and all frequency domain resource allocation (FDRA) fields are 1, which is not limited to this and can be configured by the network side or agreed upon through protocols.

Compared with related art, the DCI that triggers the random-access procedure, indicates the UE to send a random-access message to the serving cell. With the random-access method described in this embodiment, by indicating the target cell other than the serving cell in the DCI that triggers the random-access procedure, the UE can initiate a random-access message to the target cell.

In this embodiment of the present disclosure, optionally, the second information includes one or more of the following:

index of the second cell;
configuration information index of the second cell;
reference signal index of the second cell;
random-access resource index of the second cell;
random preamble index of the second cell.

Optionally, the random-access resource index includes a random-access channel (RACH) mask index.

In one embodiment, optionally, the method further includes:

determining resource information for sending the random-access message according to the second information and configuration information of at least one third cell;
where the second cell is one of the at least one third cell.

The configuration information includes one or more of the following information:

random-access channel (RACH) resource;
random-access channel transmission occasion (RACH occasion);
association between RACH resource and synchronization signal block (SSB);
association between RACH occasion and SSB;
association between RACH resource and channel state information reference signal (CSI-RS);
association between RACH occasion and CSI-RS;
index of configuration information;
maximum transmit power (Pcmax).

Optionally, the RACH resources include a dedicated RACH resource and/or common RACH resource.
In one embodiment, optionally, the method further includes:
receiving the configuration information of at least one third cell sent by the first cell. Optionally, the configuration information is RRC configuration information, and the third cell includes the first cell and/or the second cell. Through the configuration information, the first cell sends the RRC configuration of at least one third cell to the UE.
According to the received configuration information of at least one third cell, the UE can receive a beam measurement reference signal sent by at least one third cell, that is, receiving a beam measurement reference signal sent by the first cell and/or the second cell; and perform beam measurement based on the beam measurement reference signal and report measurement result information, so that the first cell (serving cell) can determine, based on the measurement result information reported by the UE, whether to switch the UE to the second cell.
With the random-access method in this embodiment, the UE determines the second cell that the UE needs to initiate random-access to, according to at least one of the index of the second cell, the configuration information index of the second cell, the reference signal index of the second cell, random-access resource index of the second cell and random preamble index of the second cell, in the first information for indicating to perform random-access; and then, based on pre-obtained configuration information of at least one third cell sent by the first cell, the UE determines the resource information for sending the random-access message by using RACH resource (or RACH occlusion), association between RACH resource and SSB, association between RACH resource and CSI-RS, indicated by the configuration information.
Optionally, the determined resource information for sending the random-access message includes random-access preamble index or ra-PreambleIndex information and frequency domain resource information.
In one implementation, optionally, the first information further includes a reference signal index.
The sending a random-access message to the second cell, includes:
sending the random-access message to the second cell by using the same spatial parameter as a reference signal indicated by the reference signal index.
Optionally, the reference signal index includes an SSB index and/or a CSI index. The UE uses the same spatial parameter as indicated by the reference signal index to send the random-access message to the second cell. The spatial parameter includes a spatial filter and/or beam.
Optionally, based on the reference signal index indicated in the first information and the received beam measurement reference signal sent by the second cell, the reference signal indicated by the first information may be determined. In one embodiment, optionally, the reference signal index is a reference signal index of a channel measurement resource (CMR) in a channel state information (CSI) report.
In one implementation of the random-access method according to the embodiment of the present disclosure, optionally, the method further includes:
calculating a transmission power of the random-access message according to the reference signal and/or power information corresponding to the second cell.
In one embodiment, optionally, the method further includes:
determining the reference signal corresponding to the second cell according to the reference signal index in the second information.
Optionally, one calculation method for the transmission power of sending the random-access message to the second cell can adopt the following formula:

$$P_{\mathrm{PRACH}b,f,c}(i) = \min\left\{P_{\mathrm{CMAX}f,c}(i), P_{\mathrm{PRACHtarget}f,c} + PL_{b,f,c}\right\} \quad [\mathrm{dBm}],$$

Where "b" is an index of bandwidth part (BWP), "f" is a carrier index, and "c" is a cell index; $P_{P\ RACH\ b\ ,\ f,c}$ is a transmission power of the random-access in a case where the BWP index is b, the carrier index is f, and the cell index is c; $P_{Cmax,\ f,\ c}$ is $P_{Cmax}$ in a case where the carrier index is f, and the cell index is c; $PL_{b,f,c}$ is a corresponding path loss in a case where the BWP index is b, the carrier index is f, and the cell index is c; $P_{PRACHt\ arg\ et,f,c}$ is a target received power in a case where the carrier index is f, and the cell index is c

Specifically, the path loss (PL) corresponding to the second cell may be calculated according to the index of the second cell and/or the reference signal index indicated by the second information. That is, the cell index in the above calculation method of transmission power is the index of the second cell.

The path loss PL can be calculated based on the SSB or CSI-RS of the second cell. For example, when the second information carries a reference signal index, a reference signal of the path loss PL can be determined according to a physical cell identifier (PCI) index or configuration information index of the second cell, thereby further determining the path loss. Optionally, the configuration information of the second cell includes a path loss reference signal, and the path loss PL can be determined based on the path loss reference signal.

Optionally, Pcmax may be determined according to the PCI index or configuration information index and configuration information of the second cell in the second information.

With the method in the embodiment of the present disclosure, the transmission power of the random-access message can be calculated according to the determined path loss PL and Pcmax corresponding to the second cell.

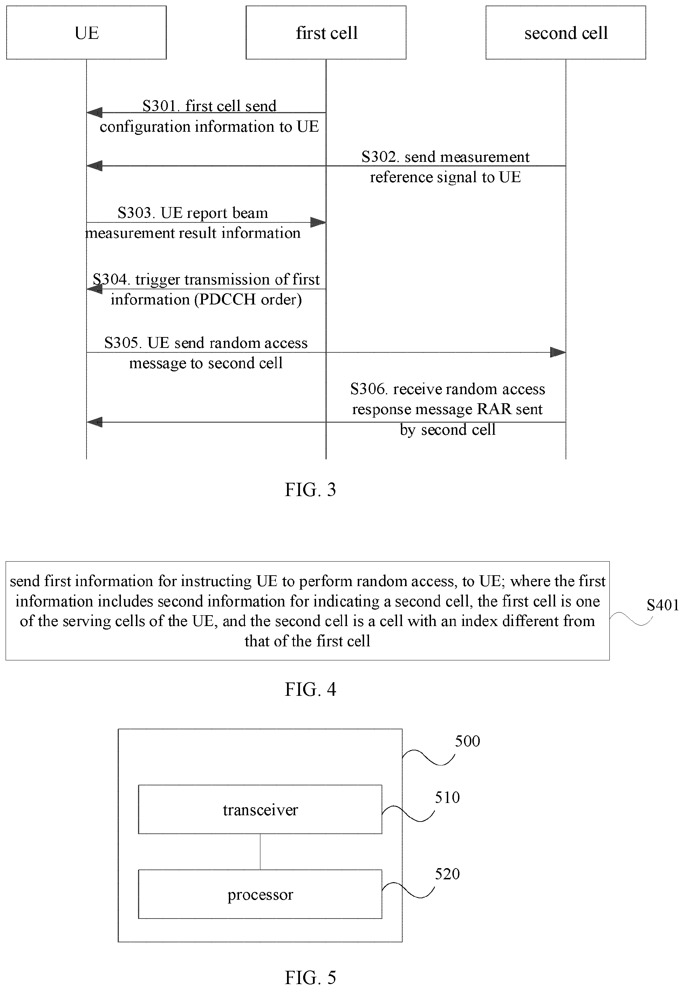

FIG. 3 is a schematic flowchart of a random-access method according to an embodiment of the present disclosure. In this embodiment, the random-access method includes the following steps.

S301: sending, by a first cell (serving cell), configuration information to a UE; where the configuration information is RRC configuration information, and includes RRC configuration of at least one third cell.

S302: sending, by the first cell and/or a second cell, a measurement reference signal to the UE.

S303: performing, by the UE, beam measurement, and reporting beam measurement result information.

S304: in a case where the first cell determines, based on the beam measurement result information, that the UE needs to switch to the second cell, triggering transmission of first information (PDCCH order), where the PDCCH order is used to trigger the UE to perform random-access with the second cell.

S305: according to the first information, sending, by the UE, a random-access message to the second cell.

S306: receiving, by the UE, a random-access response message RAR sent by the second cell, where the random-access response message RAR includes timing advance (TA) information of the second cell.

By using the random-access method in this embodiment, after the first information indicating random-access triggers the UE to random access the second cell (target cell), the second cell can send the TA information to the UE to enable the UE to complete synchronization with the second cell, so that the UE can obtain the TA information of the target cell during the L1/L2-based cell switch procedure, thereby reducing the delay caused by random-access during handover.

Another aspect of the embodiment of the present disclosure further provides a random-access method, performed by a first cell. As shown in FIG. 4, the method includes:

S401: sending first information for instructing a UE to perform random-access, to the UE; where the first information includes second information for indicating a second cell, the first cell is one of the serving cells of the UE, and the second cell is a cell with an index different from that of the first cell.

By using the random-access method in this embodiment, the first cell indicates, to the UE, the second formation of the second cell, through the first information which triggers the UE to perform random-access, and triggers the UE to random access the second cell (target cell); the second cell can send the TA information to the UE to enable the UE to complete synchronization with the second cell, so that the UE can obtain the TA information of the target cell during the L1/L2-based cell switch procedure, thereby reducing the delay caused by random-access during handover.

Optionally, in the random-access method, the second information includes one or more of the following:

index of the second cell;
configuration information index of the second cell;
reference signal index of the second cell;
random-access resource index of the second cell;
random preamble index of the second cell.

Optionally, the random-access method further includes:

sending radio resource control (RRC) information to the UE; where the RRC information includes configuration information of at least one third cell, and the second cell is one of the at least one third cell;
where the configuration information includes one or more of the following information:
random-access channel (RACH) resource;
random-access channel transmission occasion (RACH occasion);

association between RACH resource and synchronization signal block (SSB);
association between RACH occasion and SSB;
association between RACH resource and channel state information reference signal (CSI-RS);
association between RACH occasion and CSI-RS;
index of configuration information;
maximum transmit power (Pcmax).

One embodiment of the present disclosure further provides a UE. As shown in FIG. 5, the UE 500 includes a transceiver 510 and a processor 520. The transceiver 510 is used for:

receiving first information for instructing the UE to perform random-access, sent by a first cell; where the first information includes second information for indicating a second cell, the first cell is one of the serving cells of the UE, and the second cell is a cell with an index different from that of the first cell;
sending a random-access message to the second cell according to the first information.

Optionally, in the UE, the transceiver 510 is further used for:
receiving a random-access response message sent by the second cell; where the random-access response message includes timing advance (TA) information of the second cell.
Optionally, in the UE, the second information includes one or more of the following:

index of the second cell;
configuration information index of the second cell;
reference signal index of the second cell;
random-access resource index of the second cell;
random preamble index of the second cell.

Optionally, in the UE, the processor 520 is configured to:

determining resource information for sending the random-access message according to the second information and configuration information of at least one third cell;
where the second cell is one of the at least one third cell.

Optionally, in the UE, the configuration information includes one or more of the following information:

random-access channel (RACH) resource;
random-access channel transmission occasion (RACH occasion);
association between RACH resource and synchronization signal block (SSB);
association between RACH occasion and SSB;
association between RACH resource and channel state information reference signal (CSI-RS);
association between RACH occasion and CSI-RS;
index of configuration information;
maximum transmit power (Pcmax).

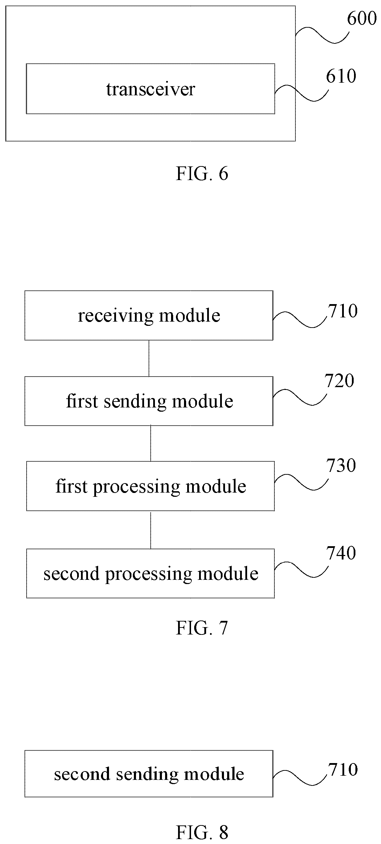

Optionally, in the UE, the resource information includes a preamble index of a random-access preambles and/or time frequency domain resources for sending the random-access preambles.
Optionally, in the UE, the first information further includes a reference signal index.
When sending a random-access message to the second cell, the transceiver 510 is used for:
sending the random-access message to the second cell by using the same spatial parameter as a reference signal indicated by the reference signal index.
Optionally, in the UE, the processor 520 is used for:
calculating a transmission power of the random-access message according to the reference signal and/or power information corresponding to the second cell.
Optionally, in the UE, the processor 520 is further used for:
determining the reference signal corresponding to the second cell according to the reference signal index in the second information.
Another embodiment of the present disclosure further provides a network equipment, applied to a first cell. As shown in FIG. 6, the network equipment 600 includes a transceiver 610. The transceiver 610 is used for:
sending first information for instructing a UE to perform random-access, to the UE; where the first information includes second information for indicating a second cell, the first cell is one of the serving cells of the UE, and the second cell is a cell with an index different from that of the first cell.

Optionally, in the network equipment, the second information includes one or more of the following:

index of the second cell;
configuration information index of the second cell;
reference signal index of the second cell;
random-access resource index of the second cell;
random preamble index of the second cell.

Optionally, in the network equipment, wherein the transceiver 610 is further used for:

sending radio resource control (RRC) information to the UE; where the RRC information includes configuration information of at least one third cell, and the second cell is one of the at least one third cell;
where the configuration information includes one or more of the following information:
random-access channel (RACH) resource;
random-access channel transmission occasion (RACH occasion);
association between RACH resource and synchronization signal block (SSB);
association between RACH occasion and SSB;
association between RACH resource and channel state information reference signal (CSI-RS);
association between RACH occasion and CSI-RS;
index of configuration information;
maximum transmit power (Pcmax).

Another embodiment of the present disclosure further provides a random-access device, applied to a UE. As shown in FIG. 7, the device includes:

a receiving module 710 used for receiving first information for instructing the UE to perform random-access, sent by a first cell; where the first information includes second information for indicating a second cell, the first cell is one of the serving cells of the UE, and the second cell is a cell with an index different from that of the first cell;
a first sending module 720 used for sending a random-access message to the second cell according to the first information.

Optionally, in the random-access device, the receiving module 710 is further used for:
receiving a random-access response message sent by the second cell; where the random-access response message includes timing advance (TA) information of the second cell.

Optionally, in the random-access device, the second information includes one or more of the following:

index of the second cell;
configuration information index of the second cell;
reference signal index of the second cell;
random-access resource index of the second cell;
random preamble index of the second cell.

Optionally, the random-access device further includes:

a first processing module 730 used for determining resource information for sending the random-access message according to the second information and configuration information of at least one third cell;
where the second cell is one of the at least one third cell.

Optionally, in the random-access device, the configuration information includes one or more of the following information:

random-access channel (RACH) resource;
random-access channel transmission occasion (RACH occasion);
association between RACH resource and synchronization signal block (SSB);
association between RACH occasion and SSB;
association between RACH resource and channel state information reference signal (CSI-RS);

association between RACH occasion and CSI-RS;
index of configuration information;
maximum transmit power (Pcmax).

Optionally, in the random-access apparatus, the resource information includes a preamble index of a random-access preambles and/or time frequency domain resources for sending the random-access preambles.

Optionally, in the random-access device, the first information further includes a reference signal index.

When sending a random-access message to the second cell, the first sending module 720 is used for:
sending the random-access message to the second cell by using the same spatial parameter as a reference signal indicated by the reference signal index.

Optionally, the random-access device further includes:
a second processing module 740 used for calculating a transmission power of the random-access message according to the reference signal and/or power information corresponding to the second cell.

Optionally, in the random-access device, the second processing module 740 is further used for:
determining the reference signal corresponding to the second cell according to the reference signal index in the second information.

Another embodiment of the present disclosure further provides a random-access device, performed by a first cell. As shown in FIG. 8, the device includes:
a second sending module 810 used for sending first information for instructing a UE to perform random-access, to the UE;
where the first information includes second information for indicating a second cell, the first cell is one of the serving cells of the UE, and the second cell is a cell with an index different from that of the first cell.

Optionally, in the random-access device, the second information includes one or more of the following:

index of the second cell;
configuration information index of the second cell;
reference signal index of the second cell;
random-access resource index of the second cell;
random preamble index of the second cell.

Optionally, in the random-access device, the second sending module 810 is further used for:

sending radio resource control (RRC) information to the UE; where the RRC information includes configuration information of at least one third cell, and the second cell is one of the at least one third cell;
where the configuration information includes one or more of the following information:
random-access channel (RACH) resource;
random-access channel transmission occasion (RACH occasion);
association between RACH resource and synchronization signal block (SSB);
association between RACH occasion and SSB;
association between RACH resource and channel state information reference signal (CSI-RS);
association between RACH occasion and CSI-RS;
index of configuration information;
maximum transmit power (Pcmax).

Another embodiment of the present disclosure further provides a network equipment, including: a processor, a memory, and a program stored on the memory and executable on the processor. When the program is executed by the processor, the random-access method described in any one of the previous embodiment is implemented.

In this embodiment of the present disclosure, the network equipment may be the above UE or a network equipment applied in the first cell. A specific implementation in which the processor of the above UE or the network equipment of the first cell performs the random-access method, can refer to the detailed description of the specific implementation in the above corresponding random-access method, which will not be described again here.

In addition, one embodiment of the present disclosure further provides a readable storage medium on which a computer program is stored. The program, when executed by a processor, causes the processor to perform the steps in the random-access method of any one of the above embodiments.

Specifically, the computer-readable storage medium is applied to the above UE or to the network equipment of the first cell. When applied to the UE or the network equipment, the corresponding execution steps in the random-access method are as described in detail above, which will not be described again here.

In the several embodiments provided in the present disclosure, it is to be understood that the disclosed methods and devices can be implemented in other ways. For example, the device embodiments described above are only illustrative. For example, division of units is only a logical function division, and there may be other division modes in actual implementation. For example, multiple units or components may be combined or can be integrated into another system, or some features can be ignored, or not implemented. On the other hand, the coupling or direct coupling or communication connection between each other shown or discussed may be through some interfaces, and the indirect coupling or communication connection of the devices or units may be in electrical, mechanical or other forms.

In addition, various function units in various embodiments of the present disclosure may be integrated into one processing unit, each unit may be physically included separately, or two or more units may be integrated into one unit. The above integrated unit can be implemented in the form of hardware or in the form of hardware plus software function units.

The above integrated unit implemented in the form of software function units can be stored in a computer-readable storage medium. The above software function units are stored in a storage medium and includes several instructions to cause a computer device (which may be a personal computer, a server, or a network device, etc.) to execute some steps of the methods described in various embodiments of the present disclosure. The aforementioned storage media include various media that can store program code, such as U disk, mobile hard disk, read-only memory (ROM), random-access memory (RAM), magnetic disk or optical disk.

The above are the preferred embodiments of the present disclosure. It should be noted that for those of ordinary skill in the art, several improvements and modifications can be made without departing from the principles described in the present disclosure. These improvements and modifications should be regarded as falling within the scope of protection of the present disclosure.

**Claims**

1. A random-access method, performed by a user equipment (UE), comprising:

   receiving first information for instructing the UE to perform random-access, sent by a first cell; wherein the first information includes second information for indicating a second cell, the first cell is one of serving cells of the UE, and the second cell is a cell with an index different from that of the first cell;
   sending a random-access message to the second cell according to the first information.

2. The random-access method according to claim 1, wherein the method further includes:
   receiving a random-access response message sent by the second cell; wherein the random-access response message includes timing advance (TA) information of the second cell.

3. The random-access method according to claim 1, wherein the second information includes one or more of the following:

   index of the second cell;
   configuration information index of the second cell;
   reference signal index of the second cell;
   random-access resource index of the second cell;
   random preamble index of the second cell.

4. The random-access method according to claim 3, wherein the method further includes:

   determining resource information for sending the random-access message according to the second information and configuration information of at least one third cell;
   wherein the second cell is one of the at least one third cell.

5. The random-access method according to claim 4, wherein the configuration information includes one or more of the following information:

   random-access channel (RACH) resource;
   random-access channel transmission occasion (RACH occasion);
   association between RACH resource and synchronization signal block (SSB);
   association between RACH occasion and SSB;
   association between RACH resource and channel state information reference signal (CSI-RS);
   association between RACH occasion and CSI-RS;
   index of configuration information;

maximum transmit power (Pcmax).

6. The random-access method according to claim 4, wherein the resource information includes a preamble index of a random-access preambles and/or time frequency domain resources for sending the random-access preambles.

7. The random-access method according to claim 1, wherein the first information further includes a reference signal index;
the sending a random-access message to the second cell, includes:
sending the random-access message to the second cell by using a same spatial parameter as a reference signal indicated by the reference signal index.

8. The random-access method according to claim 1, wherein the method further includes:
calculating a transmission power of the random-access message according to the reference signal and/or power information corresponding to the second cell.

9. The random-access method according to claim 8, wherein the method further includes:
determining the reference signal corresponding to the second cell according to the reference signal index in the second information.

10. A random-access method, performed by a first cell, comprising:
sending first information for instructing a user equipment (UE) to perform random-access, to the UE; wherein the first information includes second information for indicating a second cell, the first cell is one of serving cells of the UE, and the second cell is a cell with an index different from that of the first cell.

11. The random-access method according to claim 10, wherein the second information includes one or more of the following:

index of the second cell;
configuration information index of the second cell;
reference signal index of the second cell;
random-access resource index of the second cell;
random preamble index of the second cell.

12. The random-access method according to claim 10, wherein the method further includes:

sending radio resource control (RRC) information to the UE; wherein the RRC information includes configuration information of at least one third cell, and the second cell is one of the at least one third cell;
wherein the configuration information includes one or more of the following information:

random-access channel (RACH) resource;
random-access channel transmission occasion (RACH occasion);
association between RACH resource and synchronization signal block (SSB);
association between RACH occasion and SSB;
association between RACH resource and channel state information reference signal (CSI-RS);
association between RACH occasion and CSI-RS;
index of configuration information;
maximum transmit power (Pcmax).

13. A user equipment (UE), comprising: a transceiver; wherein the transceiver is configured to:

receive first information for instructing the UE to perform random-access, sent by a first cell; wherein the first information includes second information for indicating a second cell, the first cell is one of serving cells of the UE, and the second cell is a cell with an index different from that of the first cell;
send a random-access message to the second cell according to the first information.

14. A network equipment, applied to a first cell, comprising a transceiver;
wherein the transceiver is configured to:
send first information for instructing a user equipment (UE) to perform random-access, to the UE; wherein the first information includes second information for indicating a second cell, the first cell is one of serving cells of the UE, and the second cell is a cell with an index different from that of the first cell.

15. A random-access device, applied to a user equipment (UE), comprising:

a receiving module configured to receive first information for instructing the UE to perform random-access, sent by a first cell; wherein the first information includes second information for indicating a second cell, the first cell is one of serving cells of the UE, and the second cell is a cell with an index different from that of the first cell; a first sending module configured to send a random-access message to the second cell according to the first information.

16. A random-access device, performed by a first cell, comprising:
a second sending module configured to send first information for instructing a user equipment (UE) to perform random-access, to the UE; wherein the first information includes second information for indicating a second cell, the first cell is one of serving cells of the UE, and the second cell is a cell with an index different from that of the first cell.

17. A network equipment, comprising: a processor, a memory, and a program stored on the memory and executable on the processor; wherein the program, when executed by the processor, causes the processor to perform the random-access method according to any one of claims 1 to 9, or perform the random-access method according to any one of claims 10 to 12.

18. A readable storage medium, comprising a program stored thereon; wherein the program, when executed by a processor, causes the processor to perform the random-access method according to any one of claims 1 to 9, or perform the random-access method according to any one of claims 10 to 12.

FIG. 1

receiving first information for instructing UE to perform random access, sent by a first cell; where the first information includes second information for indicating a second cell, the first cell is one of the serving cells of the UE, and the second cell is a cell with an index different from that of the first cell

S210

sending a random access message to the second cell according to the first information

S220

FIG. 2

| UE | first cell | second cell |
|---|---|---|

S301. first cell send
configuration information to UE

S302. send measurement
reference signal to UE

S303. UE report beam
measurement result information

S304. trigger transmission of first
information (PDCCH order)

S305. UE send random access
message to second cell

S306. receive random access
response message RAR sent
by second cell

FIG. 3

send first information for instructing UE to perform random access, to UE; where the first
information includes second information for indicating a second cell, the first cell is one
of the serving cells of the UE, and the second cell is a cell with an index different from
that of the first cell

S401

FIG. 4

| transceiver | 500 / 510 |
|---|---|
| processor | 520 |

FIG. 5

transceiver

**FIG. 6**

receiving module 710

first sending module 720

first processing module 730

second processing module 740

**FIG. 7**

second sending module 710

**FIG. 8**

## INTERNATIONAL SEARCH REPORT

| International application No. |
| --- |
| **PCT/CN2023/107469** |

| A. | CLASSIFICATION OF SUBJECT MATTER |
| --- | --- |

H04W74/08(2009.01)i

According to International Patent Classification (IPC) or to both national classification and IPC

| B. | FIELDS SEARCHED |
| --- | --- |

Minimum documentation searched (classification system followed by classification symbols)

IPC:H04W,H04Q,H04L,H04B

Documentation searched other than minimum documentation to the extent that such documents are included in the fields searched

Electronic data base consulted during the international search (name of data base and, where practicable, search terms used)

CNTXT, ENTXT, CNABS, DWPI, CNKI, 3GPP: 第二小区, 第二信息, 接入, 索引, 提前量, access, time advance, cell, index, RACH, second

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112166642 A (QUALCOMM INC.) 01 January 2021 (2021-01-01) description, paragraphs 0032-0140, and figures 1-14 | 1, 10, 13-18 |
| A | CN 110535571 A (ZTE CORP.) 03 December 2019 (2019-12-03) entire document | 1-18 |
| A | CN 113260004 A (HUAWEI TECHNOLOGIES CO., LTD.) 13 August 2021 (2021-08-13) entire document | 1-18 |
| A | US 2009262681 A1 (LG ELECTRONICS INC.) 22 October 2009 (2009-10-22) entire document | 1-18 |
| A | US 2018302915 A1 (PANASONIC INTELLECTUAL PROPERTY CORPORATION OF AME) 18 October 2018 (2018-10-18) entire document | 1-18 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 October 2023** | **31 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/107469**

| Patent document cited in search report | | | Publication date (day/month/year) | Patent family member(s) | | | Publication date (day/month/year) |
|---|---|---|---|---|---|---|---|
| CN | 112166642 | A | 01 January 2021 | TW | 202005457 | A | 16 January 2020 |
| | | | | TWI | 755599 | B | 21 February 2022 |
| | | | | US | 2019364599 | A1 | 28 November 2019 |
| | | | | US | 11057938 | B2 | 06 July 2021 |
| | | | | WO | 2019226420 | A1 | 28 November 2019 |
| | | | | EP | 3797559 | A1 | 31 March 2021 |
| CN | 110535571 | A | 03 December 2019 | WO | 2020192655 | A1 | 01 October 2020 |
| | | | | AU | 2020246742 | A1 | 18 November 2021 |
| | | | | KR | 20220002329 | A | 06 January 2022 |
| | | | | US | 2022123872 | A1 | 21 April 2022 |
| | | | | EP | 3952172 | A1 | 09 February 2022 |
| | | | | EP | 3952172 | A4 | 28 December 2022 |
| CN | 113260004 | A | 13 August 2021 | | None | | |
| US | 2009262681 | A1 | 22 October 2009 | WO | 2008084949 | A1 | 17 July 2008 |
| | | | | US | 8406180 | B2 | 26 March 2013 |
| | | | | KR | 20080065351 | A | 14 July 2008 |
| | | | | KR | 101384865 | B1 | 16 April 2014 |
| US | 2018302915 | A1 | 18 October 2018 | WO | 2017064004 | A1 | 20 April 2017 |
| | | | | EP | 3363224 | A1 | 22 August 2018 |
| | | | | EP | 3363224 | B1 | 15 September 2021 |
| | | | | JP | 2018532330 | A | 01 November 2018 |
| | | | | JP | 6799589 | B2 | 16 December 2020 |
| | | | | EP | 3157282 | A1 | 19 April 2017 |
| | | | | US | 10728918 | B2 | 28 July 2020 |

Form PCT/ISA/210 (patent family annex) (July 2022)

**EP 4 531 482 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210836008